# EUROPEAN PATENT SPECIFICATION

(11) **EP 4 339 642 B1**
(45) Date of publication and mention of the grant of the patent: **08.07.2026**
(21) Application number: 22807185.8
(22) Date of filing: 18.03.2022
(51) Int. Cl.: G01S 15/18, G01S 7/527, G01S 7/533, G01S 15/931, G01S 15/10, G01S 7/53, G01S 15/87

(54) **OBJECT DETECTION DEVICE**
OBJEKTERKENNUNGSVORRICHTUNG
DISPOSITIF DE DÉTECTION D'OBJET

(30) Priority: 13.05.2021 JP 2021081850
(43) Date of publication of application: 20.03.2024
(73) Proprietor: AISIN CORPORATION, Kariya-shi, Aichi 448-8650 (JP)
(72) Inventor: SUGAE, Ippei, Kariya-shi, Aichi 448-8650 (JP)
(74) Representative: TBK
(86) International application number: PCT/JP2022/012586
(87) International publication number: WO 2022/239480

(56) References cited:
- EP-A1- 2 093 546
- JP-A- 2020 085 506
- JP-A- H09 257 930
- JP-A- S61 162 767
- US-A1- 2015 198 714
- US-A1- 2020 193 731
- US-A1- 2020 225 622

## Description

### Technical Field

This disclosure relates to an object detection device.

### Background Art

In a vehicle control system or the like, an object detection device which detects an object present around a vehicle by transmitting and receiving ultrasonic waves is used. Data acquired by the object detection device is output to an electronic control unit (ECU) which executes arithmetic processing for controlling the vehicle, and is used for danger avoidance control, automatic traveling control, and the like.

Examples of the related art include JP 2014-215283A (Reference 1).

Since there are limits to a data transfer capability of transferring data from the object detection device to the ECU and an information processing capability of the ECU, it is necessary to adjust a transfer amount (transfer rate) of data transferred from the object detection device to the ECU.

One of the problems to be solved by this disclosure is to provide an object detection device which can optimize data transfer.

US 2015/198714 A1 discloses a device and method for generating and evaluating ultrasound signals, particularly for determining the distance of a vehicle from an obstacle. An ultrasound received signal is received by at least one ultrasound receiver subscriber of a data bus, after a burst transmission signal comprising a plurality of ultrasound pulses and having a burst length has been transmitted by at least one ultrasound transmitter subscriber of the data bus. The ultrasound received signal is subdivided into time sections which are substantially equal to half the burst length. The peak value for each time section of the ultrasound received signal is transmitted via the data bus to a central control and evaluation unit. On the basis of the peak values of the received signal for each time section, taking into account threshold value tracking, it is determined in the control and evaluation unit whether the ultrasound received signal has time sections in which the ultrasound received signal is greater than the tracked threshold value or equal to the tracked threshold value.

US 2020/193731 A1 is concerned with forwarding to a back end. In a first step, sensor data are detected along a route of a motor vehicle. On the basis of the sensor data, features and context information on the features are then identified within segments of the route. Finally, the features and the context information on the features are combined into a message for the route.

US 2020/225622 A1 discloses an occupancy grid manager having a non-uniform occupancy which includes a plurality of cells, configurable in a plurality of cell sizes, each cell representing a region of an environment of a vehicle; and one or more processors, configured to determine one or more context factors; select a cell size for a cell of the plurality of cells based on the one or more context factors; process sensor data provided by one or more sensors; and determine a probability that the cell of the plurality of cells is occupied based on the sensor data.

### Summary of Invention

### Solution to Problem

The invention is set out in claim 1. The dependent claims define advantageous embodiments. The embodiments that do not fall under the scope of the claims are to be interpreted as examples useful for understanding the disclosure.

An object detection device includes: an acquisition unit configured to acquire distance information indicating a distance from a transmission and reception unit to an object based on a time until an ultrasonic wave transmitted from the transmission and reception unit is reflected by the object and returns; an output unit configured to output the distance information; and an adjustment unit configured to adjust the number of pieces of distance information, which is output from the output unit in each of a plurality of divided periods set to divide a measurement cycle corresponding to a period in which the ultrasonic wave is transmitted and received once by a predetermined time width, to be equal to or less than a predetermined first upper limit value.

According to the above configuration, data transfer when outputting the distance information to the ECU can be optimized according to a data transfer capability of a device connecting the object detection device to the ECU and an information processing capability of the ECU.

The adjustment unit may adjust the number of pieces of distance information output from the output unit in the measurement cycle to be equal to or less than a predetermined second upper limit value.

Thus, the data transfer can be more appropriately optimized by adjusting a data amount of the output distance information not only for each divided period but also for each measurement cycle.

When the distance information larger than the first upper limit value is acquired in one of the divided periods, the adjustment unit may preferentially output the distance information having a short elapsed time from transmission of the ultrasonic wave.

Accordingly, it is possible to preferentially output the distance information corresponding to an object present at a short distance.

When the distance information larger than the first upper limit value is acquired in one of the divided periods, the adjustment unit may preferentially output the distance information in which an intensity of a reflected wave from the object is high.

Accordingly, the distance information with high detection accuracy can be preferentially output.

The plurality of divided periods may be set so as to unequally divide the measurement cycle.

The detection accuracy can be improved by shortening a time width of the divided period. Therefore, detection accuracy of a specific distance range can be improved by setting the time width of the divided period corresponding to the specific distance range to be short.

A divided period of the plurality of divided periods may be shorter as an elapsed time from transmission of the ultrasonic wave is shorter.

Accordingly, it is possible to improve detection accuracy at a short distance.

### Brief Description of Drawings

[FIG. 1] FIG. 1 is a top view showing an example of a configuration of a vehicle according to a first embodiment;
[FIG. 2] FIG. 2 is a block diagram showing an example of a configuration of a vehicle control device according to the first embodiment;
[FIG. 3] FIG. 3 is a block diagram showing an example of a function configuration of an object detection device according to the first embodiment;
[FIG. 4] FIG. 4 is a diagram showing an example of a method for acquiring TOF based on echo information in the first embodiment;
[FIG. 5] FIG. 5 is a diagram showing an example of a relationship between a measurement cycle, a plurality of divided periods, and the echo information according to the first embodiment;
[FIG. 6] FIG. 6 is a diagram showing a first example of a function of a data amount adjustment unit according to the first embodiment;
[FIG. 7] FIG. 7 is a diagram showing a second example of the function of the data amount adjustment unit according to the first embodiment;
[FIG. 8] FIG. 8 is a flowchart showing an example of processing in the object detection device according to the first embodiment; and
[FIG. 9] FIG. 9 is a diagram showing an example of a relationship between a measurement cycle, a plurality of divided periods, and echo information according to a second embodiment.

### Description of Embodiments

Hereinafter, embodiments disclosed here will be described with reference to the drawings. Configurations of the embodiments described below and functions and effects provided by the configurations are merely examples, and this disclosure is not limited to the following description.

### (First Embodiment)

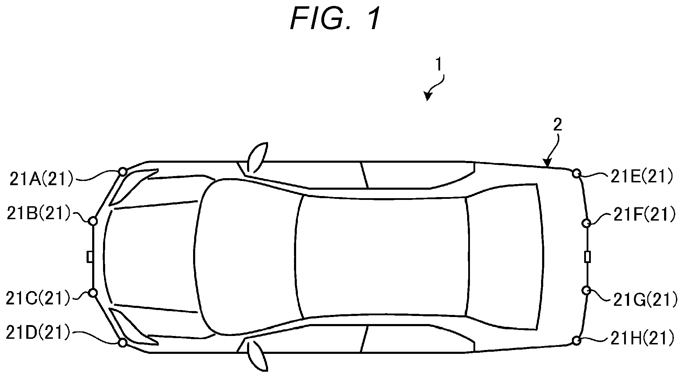

FIG. 1 is a top view showing an example of a configuration of a vehicle 1 according to a first embodiment. The vehicle 1 is an example of a moving body on which an object detection device according to the present embodiment is mounted. The object detection device according to the present embodiment is a device which detects an object (another vehicle, a structure, a pedestrian, a road surface, or the like) present around the vehicle 1 based on time of flight (TOF), Doppler shift information or the like acquired by transmitting an ultrasonic wave from the vehicle 1 and receiving a reflected wave from the object.

The object detection device according to the present embodiment includes a plurality of transmission and reception units 21A to 21H (hereinafter, abbreviated as a transmission and reception unit 21 when it is not necessary to distinguish between the plurality of transmission and reception units 21A to 21H). Each transmission and reception unit 21 is installed on a vehicle body 2 as an exterior of the vehicle 1, transmits an ultrasonic wave (transmitted wave) toward an outside of the vehicle body 2, and receives a reflected wave from an object present outside the vehicle body 2. In the example shown in FIG. 1, four transmission and reception units 21A to 21D are disposed at front end portions of the vehicle body 2, and four transmission and reception units 21E to 21H are disposed at rear end portions. The number and installation positions of the transmission and reception units 21 are not limited to the above example.

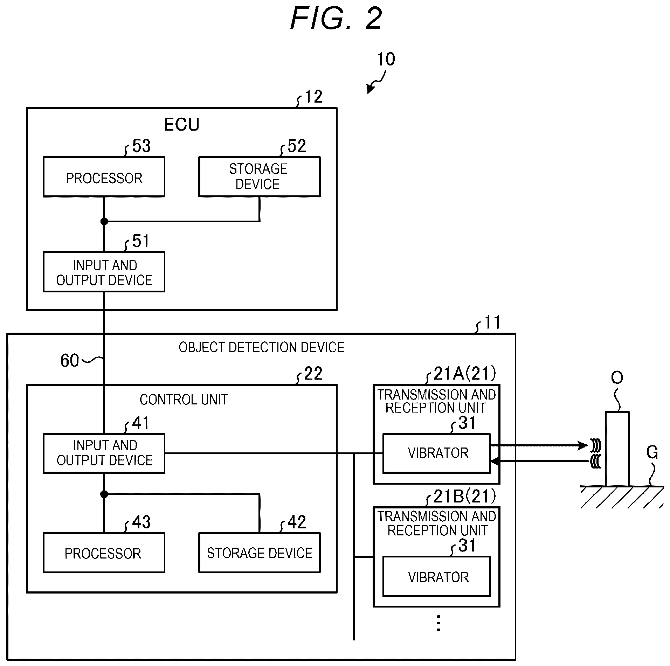

FIG. 2 is a block diagram showing an example of a configuration of a vehicle control device 10 according to the first embodiment. The vehicle control device 10 includes an object detection device 11 and an ECU 12. The vehicle control device 10 performs processing for controlling the vehicle 1 based on information output from the object detection device 11.

The object detection device 11 includes the plurality of the transmission and reception units 21 and a control unit 22. Each of the transmission and reception units 21 includes a vibrator 31 implemented using a piezoelectric element or the like, an amplifier, and the like, and implements transmission and reception of ultrasonic waves by vibration of the vibrator 31. Specifically, the transmission and reception unit 21 transmits an ultrasonic wave generated in response to the vibration of the vibrator 31 as a transmitted wave, and detects the vibration of the vibrator 31 caused by a reflected wave of the transmitted wave being reflected by an object. The object includes a target O with which the vehicle 1 is to avoid contact, a road surface G on which the vehicle 1 travels, and the like. The vibration of the vibrator 31 is converted into an electric signal, and echo information indicating a change over time in an intensity (an amplitude) of the reflected wave from the object can be acquired based on the electric signal. Distance information such as the TOF or the like corresponding to a distance from the transmission and reception unit 21 (the vehicle body 2) to the object can be acquired based on the echo information.

The echo information may be generated based on data acquired by one transmission and reception unit 21, and may be generated based on a plurality of pieces of data respectively acquired by the plurality of transmission and reception units 21. For example, the echo information on an object present in front of the vehicle body 2 may be generated based on two or more pieces of data (for example, an average value) acquired by two or more of the four transmission and reception units 21A to 21D disposed at front parts of the vehicle body 2 (see FIG. 1). Similarly, the echo information on an object present behind the vehicle body 2 may be generated based on two or more pieces of data acquired by two or more of the four transmission and reception units 21E to 21H disposed at rear parts of the vehicle body 2 (see FIG. 1).

In the example shown in FIG. 2, a configuration is shown in which both transmission of a transmitted wave and reception of a reflected wave are performed by using the single vibrator 31, but a configuration of the transmission and reception unit 21 is not limited to this. For example, a configuration in which a transmission side and a reception side are separated from each other, such as a configuration in which a vibrator for transmitting a transmitted wave and a vibrator for receiving a reflected wave are separately provided, may be used.

The control unit 22 includes an input and output device 41, a storage device 42, and a processor 43. The input and output device 41 is an interface device for performing data transfer between the control unit 22 and an outside (the transmission and reception unit 21, the ECU 12, and the like). The storage device 42 includes a main storage device such as a read only memory (ROM) or a random access memory (RAM), and an auxiliary storage device such as a hard disk drive (HDD) or a solid state drive (SSD). The processor 43 is an integrated circuit which executes various types of processing for implementing a function of the control unit 22, and may be implemented by using, for example, a central processing unit (CPU) which operates according to a program, and an application specific integrated circuit (ASIC) designed for a specific application. The processor 43 executes various types of arithmetic processing and control processing by reading and executing a program stored in the storage device 42.

The ECU 12 is a unit which executes various types of processing for controlling the vehicle 1 based on various types of information acquired from the object detection device 11 or the like. The ECU 12 includes an input and output device 51, a storage device 52, and a processor 53. The input and output device 51 is an interface device for performing data transfer between the ECU 12 and an external mechanism (the object detection device 11, a drive mechanism, a brake mechanism, a steering mechanism, a transmission mechanism, an in-vehicle display, a speaker, and the like). The storage device 52 includes a main storage device such as a ROM and a RAM, and an auxiliary storage device such as an HDD and an SSD. The processor 53 is an integrated circuit which executes various types of processing for implementing a function of the ECU 12, and may be implemented by using, for example, a CPU and an ASIC. The processor 53 executes various types of arithmetic processing and control processing by reading a program stored in the storage device 52.

The input and output device 41 of the object detection device 11 and the input and output device 51 of the ECU 12 are connected via a bus 60 conforming to a predetermined standard such as a controller area network (CAN).

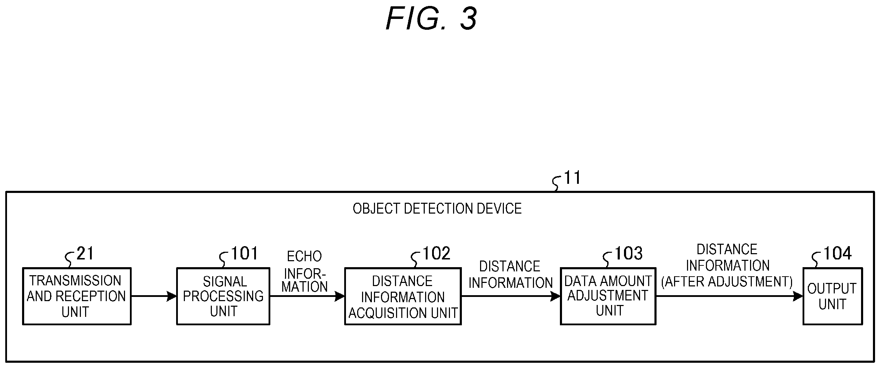

FIG. 3 is a block diagram showing an example of a function configuration of the object detection device 11 according to the first embodiment. The object detection device 11 according to the present embodiment includes a signal processing unit 101, a distance information acquisition unit 102 (acquisition unit), a data amount adjustment unit 103 (adjustment unit), and an output unit 104. The functional components 101 to 104 are implemented by cooperation of hardware components of the object detection device 11 as shown in FIG. 2 and software components such as a program stored in the storage device 42.

The signal processing unit 101 performs predetermined processing on the data acquired by the transmission and reception unit 21, and generates echo information indicating a change over time in an intensity (amplitude) of the reflected wave for each measurement cycle. The predetermined processing is, for example, amplification processing, filter processing, or envelope processing for an electric signal corresponding to vibration of the vibrator 31. The measurement cycle corresponds to a period in which the transmission and reception unit 21 transmits and receives an ultrasonic wave once, and is a period which is appropriately determined according to performance, a use state, and the like of the transmission and reception unit 21. The measurement cycle may be, for example, TOF corresponding to a distance equal to or less than 10 m.

The distance information acquisition unit 102 acquires distance information (for example, TOF) indicating a distance from the vehicle 1 to an object (target 0) present around the vehicle 1 based on echo information generated by the signal processing unit 101. The distance information acquisition unit 102 acquires, for example, TOF corresponding to a timing (peak) at which the intensity of the reflected wave from the object exceeds a threshold value.

The data amount adjustment unit 103 adjusts the number of pieces of distance information, which is output in each of a plurality of divided periods set to divide one measurement cycle by a predetermined time width, to be equal to or less than a predetermined upper limit value in the divided period (first upper limit value). The data amount adjustment unit 103 may adjust the number of pieces of distance information output in the measurement cycle to be equal to or less than a predetermined total upper limit value (second upper limit value).

The output unit 104 outputs the distance information adjusted by the data amount adjustment unit 103 to the ECU 12 or the like.

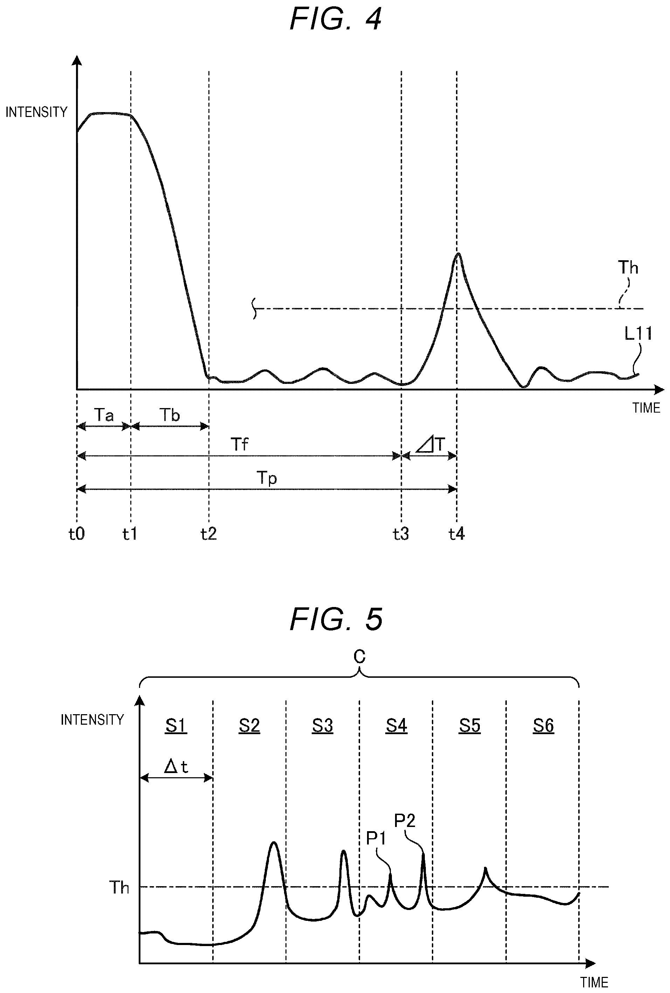

FIG. 4 is a diagram showing an example of a method for acquiring TOF based on the echo information in the first embodiment. FIG. 4 shows an envelope L11 (an example of the echo information) indicating a change over time in the intensity of the reflected wave (a magnitude of vibration of the vibrator 31). In a graph shown in FIG. 4, a horizontal axis corresponds to a time (TOF), and a vertical axis corresponds to an intensity of an ultrasonic wave transmitted and received by the transmission and reception unit 21.

It can be seen from the envelope L11 that the vibrator 31 is driven and vibrates from a timing t0 for a time Ta, so that transmission of a transmitted wave is completed at a timing t1, and then vibration of the vibrator 31 due to inertia continues while being attenuated during a time Tb until a timing t2. Therefore, in the graph shown in FIG. 4, the time Tb corresponds to a so-called reverberation time.

The envelope L11 reaches a peak at which the magnitude of the vibration of the vibrator 31 becomes equal to or larger than a predetermined threshold value Th at a timing t4 at which a time Tp has elapsed from the timing t0 at which the transmission of the transmitted wave is started. The threshold value Th is a value which is preset to identify whether the vibration of the vibrator 31 is caused by reception of a reflected wave from the target O (another vehicle, a structure, a pedestrian or the like), or whether the vibration is caused by reception of a reflected wave from an object other than the target O (for example, the road surface G). Although the threshold value Th is shown as a constant value here, the threshold value Th may be a variable value which changes according to passage of time, a status, or the like. Vibration having a peak equal to or larger than the threshold value Th can be considered to be caused by reception of a reflected wave from the target O.

In the envelope L11, the vibration of the vibrator 31 is attenuated after the timing t4. Therefore, the timing t4 corresponds to a timing at which the reception of the reflected wave from the target O is completed, that is, a timing at which the transmitted wave last transmitted at the timing t1 returns as a reflected wave.

In the envelope L11, a timing t3 as a start point of the peak at the timing t4 corresponds to a timing at which reception of the reflected wave from the target O starts, that is, a timing at which the transmitted wave first transmitted at the timing t0 returns as the reflected wave. Therefore, a time ΔT between the timing t3 and the timing t4 is equal to the time Ta as a transmission time of the transmitted wave.

Based on the above description, in order to obtain a distance to the target O by using the TOF, it is necessary to obtain a time Tf between the timing t0 at which the transmitted wave starts to be transmitted and the timing t3 at which the reflected wave starts to be received. The time Tf can be obtained by subtracting the time ΔT equal to the time Ta as the transmission time of the transmitted wave from the time Tp as a difference between the timing t0 and the timing t4 at which the intensity of the reflected wave exceeds the threshold value Th and reaches the peak.

The timing t0 when the transmitted wave starts to be transmitted can be easily specified as a timing when the object detection device 11 starts to operate, and the time Ta as the transmission time of the transmitted wave is predetermined by a setting or the like. Therefore, a distance to the target O can be obtained by specifying the timing t4 at which the intensity of the reflected wave becomes equal to or larger than the threshold value Th and reaches the peak. The distance information acquisition unit 102 acquires object information (TOF) related to the target O by, for example, the above method.

Hereinafter, a function of the data amount adjustment unit 103 according to the present embodiment will be described. The data amount adjustment unit 103 adjusts a data amount of the distance information acquired by the distance information acquisition unit 102 so as to conform to a data transfer capability of devices (the input and output devices 41 and 51, the bus 60, and the like) connecting the object detection device 11 to the ECU 12 and an information processing capability of the ECU 12.

FIG. 5 is a diagram showing an example of a relationship between a measurement cycle C, a plurality of divided periods S1 to S6, and the echo information according to the first embodiment. In the present embodiment, the measurement cycle C is divided into six divided periods S1 to S6. Time widths Δt of the plurality of divided periods S1 to S6 are the same. The measurement cycle C and the time width Δt are not particularly limited, but may be, for example, a period corresponding to the measurement cycle C of about 6 m and a period corresponding to the time width Δt of about 1 m.

In the echo information (envelope) shown in FIG. 5, a time corresponding to the peak having the intensity exceeding the threshold value Th is TOF corresponding to a distance from the vehicle body 2 (transmission and reception unit 21) to the target 0. In the example shown in FIG. 5, no peak (TOF peak) exceeding the threshold value Th is detected in the first divided period S1. One TOF peak is detected in the second divided period S2. One TOF peak is detected in the third divided period S3. Two TOF peaks P1 and P2 are detected in the fourth divided period S4. One TOF peak is detected in the fifth divided period S5. No TOF peak is detected in the sixth divided period S6.

The data amount adjustment unit 103 according to the present embodiment adjusts the number of TOFs output in one divided period (each of the plurality of divided periods S1 to S6) to be equal to or less than the upper limit value in the divided period. The data amount adjustment unit 103 may adjust the number of TOFs output in the measurement cycle C to be equal to or less than the total upper limit value.

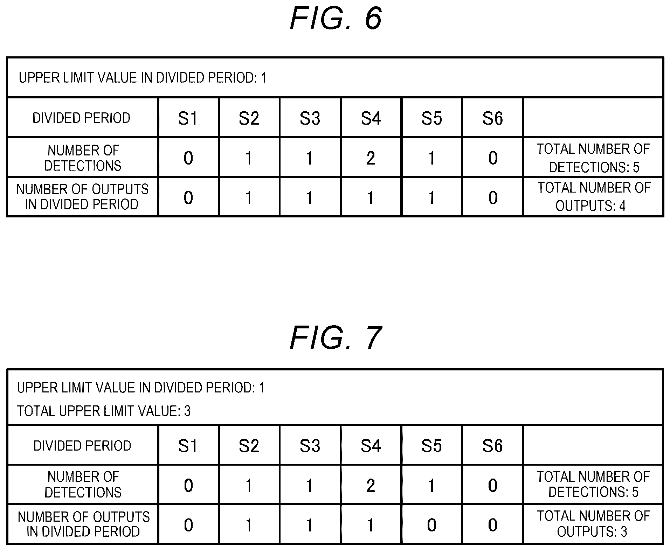

FIG. 6 is a diagram showing a first example of the function of the data amount adjustment unit 103 according to the first embodiment. In this example, the upper limit value in the divided period is set to 1.

In FIG. 6, the number of detections indicates the number of TOF peaks detected in each of the divided periods S1 to S6, and corresponds to the number of TOF peaks shown in FIG. 5. A total number of detections indicates the number of TOF peaks detected in the entire measurement cycle C, and is a total of the number of detections in the divided periods S1 to S6. The number of outputs in the divided period indicates the number of TOF peaks after adjustment by the data amount adjustment unit 103. A total number of outputs indicates the number of TOF peaks finally output from the output unit 105 in the entire measurement cycle C, and is a total of outputs in the divided periods in the divided periods S1 to S6.

The data amount adjustment unit 103 in this example adjusts the number of outputs in each of all the divided periods to be equal to or less than the upper limit value "1" in the divided period. In this example, as shown in FIGS. 5 and 6, the two TOF peaks P1 and P2 are detected in the fourth divided period S4. That is, the number of detections "2" in the fourth divided period S4 exceeds the upper limit value "1" in the divided period. In such a case, the data amount adjustment unit 103 outputs only one of the two TOF peaks P1 and P2. In a case where the number of detections of the TOF peaks in one divided period exceeds the upper limit value in the divided period in this way, how to select a TOF peak to be output is not to be particularly limited, and may be appropriately determined according to a use state or the like. For example, TOF (TOF peak P1 in this example) having a short elapsed time from the transmission of the ultrasonic wave may be preferentially output. Accordingly, TOF corresponding to an object present at a short distance can be preferentially output, and accuracy of danger avoidance control or the like can be improved. TOF (TOF peak P2 in this example) having a high intensity of the reflected wave may be preferentially output. Accordingly, TOF with high reliability can be preferentially output, and the accuracy of the danger avoidance control or the like can be improved.

FIG. 7 is a diagram showing a second example of the function of the data amount adjustment unit 103 according to the first embodiment. In this example, the upper limit value in the divided period is set to 1, and the total upper limit value is set to 3.

The data amount adjustment unit 103 in this example performs adjustment so that the number of outputs in each of all the divided periods is equal to or less than the upper limit value "1" in the divided period, and the total number of outputs is equal to or less than a total upper limit value "3". In this example, in order to satisfy the condition that the upper limit value in the divided period is equal to or less than "1", the number of outputs in the divided period for the fourth divided period S4 is adjusted to "1" as in the first example shown in FIG. 6. In order to satisfy the condition that the total upper limit value is equal to or less than "3", the number of outputs in the divided period for the fifth divided period S5 is adjusted to "0". In a case where the number of detections of the TOF peaks in the measurement cycle C exceeds the total upper limit value in this way, how to select the TOF peak to be output is not to be particularly limited, and may be appropriately determined according to a use state or the like. For example, the TOF having a short elapsed time from the transmission of the ultrasonic wave may be preferentially output. Accordingly, the TOF corresponding to an object present at a short distance can be preferentially output, and the accuracy of the danger avoidance control or the like can be improved. The TOF having a high intensity of the reflected wave may be preferentially output. Accordingly, the TOF with high reliability can be preferentially output, and the accuracy of the danger avoidance control or the like can be improved.

As described above, the data transfer from the object detection device 11 to the ECU 12 can be optimized by adjusting the data amount of the acquired TOF (distance information) based on the upper limit value in the divided period or the total upper limit value.

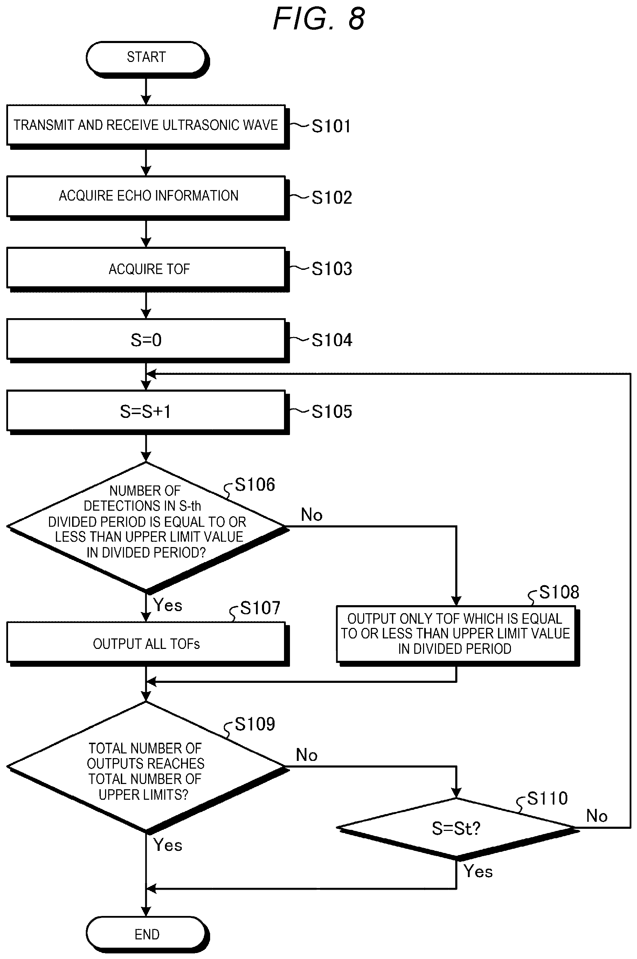

FIG. 8 is a flowchart showing an example of processing in the object detection device 11 according to the first embodiment. The flowchart shown in FIG. 8 shows the processing in one measurement cycle C, and is repeatedly executed in each measurement cycle C.

When the transmission and reception unit 21 transmits and receives an ultrasonic wave (S101), the signal processing unit 101 acquires echo information based on data (such as a change over time in an intensity of a reflected wave) acquired by the transmission and reception unit 21 (S102). The distance information acquisition unit 102 acquires TOF corresponding to the distance from the vehicle body 2 to the target 0 based on the echo information (S103).

After resetting a variable S indicating an order of the plurality of divided periods S1 to S6 to 0 (S104), the data amount adjustment unit 103 adds 1 to the variable S (S105). Thereafter, the data amount adjustment unit 103 determines whether the number of detections in an S-th divided period is equal to or less than the upper limit value in the divided period (S106).

When the number of detections in the S-th divided period is equal to or less than the upper limit value in the divided period (S106: Yes), the data amount adjustment unit 103 causes the output unit 107 to output all the TOFs detected in the S-th divided period (S107). At this time, when TOF is not detected in the S-th divided period, TOF is not output. On the other hand, when the number of detections in the S-th divided period is not equal to or less than the upper limit value in the divided period (S106: No), the data amount adjustment unit 103 causes the output unit 107 to output only TOF which is selected from the plurality of TOFs detected in the S-th divided period and is equal to or less than the upper limit value in the divided period (S108).

After the execution of step S107 or S108, the data amount adjustment unit 103 determines whether the total number of outputs (the number of TOFs output so far in the current measurement cycle C) reaches the total upper limit value (S109). If the total number of outputs reaches the total upper limit value (S109: Yes), output processing for TOF in the current measurement cycle C is ended. On the other hand, if the total number of outputs does not reach the total upper limit value (S109: No), it is determined whether the variable S reaches a total number St of divided periods (6 in the example shown in FIGS. 5 to 7) (S110). If the variable S reaches the total number St (S110: Yes), the output processing for the TOF in the current measurement cycle C is ended. On the other hand, if the variable S does not reach the total number St (S110: No), 1 is added to the variable S in step S105, and the processing in step S106 and thereafter are executed again.

According to the above embodiment, it is possible to optimize the data amount (transfer rate) of the distance information (TOF) output from the object detection device 11 to the ECU 12 according to the data transfer capability and the information processing capability.

### (Second Embodiment)

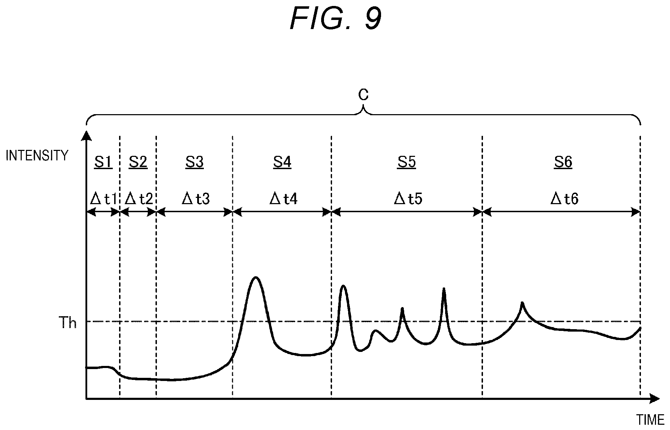

Hereinafter, a second embodiment will be described. FIG. 9 is a diagram showing an example of a relationship between the measurement cycle C, the plurality of divided periods S1 to S6, and echo information according to the second embodiment.

The plurality of divided periods S1 to S6 in the present embodiment have different time widths Δt1 to Δt6. As the time width is reduced, detection accuracy of the target 0 can be improved. Therefore, by setting the plurality of divided periods S1 to S6 having different time widths in this way, it is possible to locally improve the detection accuracy. In the example shown in FIG. 9, a relationship Δt1 < Δt2 < Δt3 < Δt4 < Δd5 < Δt6 is satisfied. By setting the plurality of divided periods S1 to S6 in this way, detection accuracy in a region close to the vehicle body 2 can be improved.

A program for causing a computer (for example, the processor 43 of the control unit 22) to execute processing for implementing various functions in the above embodiments can be provided by being recorded as an installable or executable format file in a computer-readable recording medium such as a CD (compact disc)-ROM, a flexible disc (FD), a CD-R (recordable), or a DVD (digital versatile disk). The program may be provided or distributed via a network such as the Internet.

### Reference Signs List

1: vehicle
2: vehicle body
10: vehicle control device
11: object detection device
12: ECU
21, 21A to 21H: transmission and reception unit
22: control unit
31: vibrator
41: input and output device
42: storage device
43: processor
51: input and output device
52: storage device
53: processor
60: bus
101: signal processing unit
102: distance information acquisition unit
103: data amount adjustment unit
104: output unit
G: road surface
O: target

## Claims

1. An object detection device (11) comprising:
an acquisition unit (102) configured to acquire distance information indicating a distance from a transmission and reception unit (21) to an object based on a time until an ultrasonic wave transmitted from the transmission and reception unit is reflected by the object and returns;
an output unit (104) configured to output the distance information; and
an adjustment unit (103) configured to adjust a number of pieces of distance information to be output from the output unit in each of a plurality of divided periods set to divide a measurement cycle corresponding to a period in which the ultrasonic wave is transmitted and received once into a predetermined number of the divided periods, to be equal to or less than a predetermined first upper limit value, **characterized in that**
in case, in a divided period of the plurality of divided periods, the number of pieces of distance information acquired by the acquisition unit (102) for the divided period is equal to or less than the predetermined first upper limit value, the adjustment unit (103) is configured to cause the output unit (104) to output all the pieces of distance information acquired for the divided period, and
in case, in the divided period, the number of pieces of distance information acquired by the acquisition unit (102) for the divided period is not equal to or less than the predetermined first upper limit value, the adjustment unit is (103) configured to cause the output unit (104) to output only a piece or pieces of distance information which is or which are selected from the number of pieces of distance information acquired by the acquisition unit (102) for the divided period and is or are equal to or less than the predetermined first upper limit value.

2. The object detection device (11) according to claim 1, wherein
the adjustment unit (103) is configured to adjust the number of pieces of distance information to be output from the output unit (104) in the measurement cycle to be equal to or less than a predetermined second upper limit value.

3. The object detection device (11) according to claim 1 or 2, wherein
when the number of pieces of distance information acquired in one of the divided periods is larger than the first upper limit value , the adjustment unit (103) is configured to output the pieces of distance information having a shorter elapsed time from transmission of the ultrasonic wave than other pieces of distance information in the one of the divided periods.

4. The object detection device (11) according to claim 1 or 2, wherein
when the number of pieces of distance information acquired in one of the divided periods is larger than the first upper limit value , the adjustment unit (103) is configured to output the pieces of distance information in which an intensity of a reflected wave from the object is higher than in other pieces of distance information in the one of the divided periods.

5. The object detection device (11) according to any one of claims 1 to 4, wherein
the plurality of divided periods are set so as to unequally divide the measurement cycle.

6. The object detection device (11) according to claim 5, wherein
a divided period of the plurality of divided periods is shorter as an elapsed time from transmission of the ultrasonic wave is shorter.

## Patentansprüche

1. Objektdetektionsgerät (11) umfassend:
eine Erfassungseinheit (102), die konfiguriert ist, um Entfernungsinformationen zu erfassen, die eine Entfernung von einer Sende- und Empfangseinheit (21) zu einem Objekt auf Grundlage einer Zeit angeben, bis eine von der Sende- und Empfangseinheit gesendete Ultraschallwelle von dem Objekt reflektiert wird und zurückkehrt;
eine Ausgabeeinheit (104), die konfiguriert ist, um die Entfernungsinformationen auszugeben; und
eine Anpassungseinheit (103), die konfiguriert ist, um eine Anzahl von Entfernungsinformationen, die von der Ausgabeeinheit in jeder einer Vielzahl von unterteilten Zeiträumen auszugeben sind, die festgelegt sind, um einen Messzyklus, der einem Zeitraum entspricht, in dem die Ultraschallwelle einmal gesendet und empfangen wird, in eine vorbestimmte Anzahl von unterteilten Zeiträume zu unterteilen, anzupassen, dass sie gleich einem oder weniger als ein vorbestimmter erster oberer Grenzwert sind, **dadurch gekennzeichnet, dass**
für den Fall, dass in einem unterteilten Zeitraum der Vielzahl von unterteilten Zeiträumen die Anzahl von Entfernungsinformationen, die von der Erfassungseinheit (102) für den unterteilten Zeitraum erfasst wurden, gleich dem oder weniger als der vorbestimmte erste obere Grenzwert ist, die Anpassungseinheit (103) konfiguriert ist, um die Ausgabeeinheit (104) zu veranlassen, alle Entfernungsinformationen auszugeben, die für den unterteilten Zeitraum erfasst wurden, und
für den Fall, dass in dem unterteilten Zeitraum die Anzahl der Entfernungsinformationen, die von der Erfassungseinheit (102) für den unterteilten Zeitraum erfasst wurden, nicht gleich dem oder weniger als der vorbestimmte erste obere Grenzwert ist, die Anpassungseinheit (103) konfiguriert ist, um die Ausgabeeinheit (104) zu veranlassen, nur eine Entfernungsinformation oder Entfernungsinformationen auszugeben, die aus der Anzahl der Entfernungsinformationen, die von der Erfassungseinheit (102) für den unterteilten Zeitraum erfasst wurden, ausgewählt ist oder sind und gleich dem oder weniger als der vorbestimmte erste obere Grenzwert ist oder sind.

2. Objektdetektionsgerät (11) nach Anspruch 1, wobei
die Anpassungseinheit (103) konfiguriert ist, um die Anzahl der von der Ausgabeeinheit (104) in dem Messzyklus auszugebenden Entfernungsinformationen so anzupassen, dass sie gleich oder weniger als ein vorbestimmter zweiter oberer Grenzwert ist.

3. Objektdetektionsgerät (11) nach Anspruch 1 oder 2, wobei
wenn die Anzahl der Entfernungsinformationen, die in einem der unterteilten Zeiträume erfasst wurden, größer ist als der erste obere Grenzwert, die Anpassungseinheit (103) konfiguriert ist, um die Entfernungsinformationen auszugeben, die eine kürzere verstrichene Zeit ab dem Senden der Ultraschallwelle haben als andere Entfernungsinformationen in dem einen der unterteilten Zeiträume.

4. Objektdetektionsgerät (11) nach Anspruch 1 oder 2, wobei
wenn die Anzahl der Entfernungsinformationen, die in einem der unterteilten Zeiträume erfasst wurden, größer ist als der erste obere Grenzwert, die Anpassungseinheit (103) konfiguriert ist, um die Entfernungsinformationen auszugeben, in denen eine Intensität einer von dem Objekt reflektierten Welle höher ist als in anderen Entfernungsinformationen in dem einen der unterteilten Zeiträume.

5. Objektdetektionsgerät (11) nach einem der Ansprüche 1 bis 4, wobei
die Vielzahl von unterteilten Zeiträumen so festgelegt sind, dass sie den Messzyklus ungleichmäßig unterteilen.

6. Objektdetektionsgerät (11) nach Anspruch 5, wobei
ein unterteilter Zeitraum der Vielzahl von unterteilten Zeiträumen kürzer ist, wenn eine verstrichene Zeit ab dem Senden der Ultraschallwelle kürzer ist.

## Revendications

1. Dispositif de détection d'objets (11) comprenant :
une unité d'acquisition (102) configurée pour acquérir des informations de distance indiquant une distance à partir d'une unité de transmission et de réception (21) à un objet, sur la base d'une période jusqu'à ce qu'une onde ultrasonique transmise par l'unité de transmission et de réception soit réfléchie par l'objet et revienne ;
une unité de sortie (104) configurée pour sortir les informations de distance ; et
une unité d'ajustement (103) configurée pour ajuster un nombre d'informations de distance à être sorties à partir de l'unité de sortie dans chacune d'une pluralité de périodes divisées définies pour diviser un cycle de mesure correspondant à une période dans laquelle l'onde ultrasonique est transmise et reçue une fois en un nombre prédéterminé des périodes divisées, afin qu'il soit égal ou inférieur à une première valeur limite supérieure prédéterminée, **caractérisée en ce que**
dans un cas, dans une période divisée parmi la pluralité de périodes divisées, le nombre d'informations de distance acquises par l'unité d'acquisition (102) pour la période divisée est égal ou inférieur à la première valeur limite supérieure prédéterminée, l'unité d'ajustement (103) est configurée pour amener l'unité de sortie (104) à sortir toutes les informations de distance acquises pour la période divisée, et
dans un cas, dans la période divisée, le nombre d'informations de distance acquises par l'unité d'acquisition (102) pour la période divisée n'est pas égal ou inférieur à la première valeur limite supérieure prédéterminée, l'unité d'ajustement (103) est configurée pour amener l'unité de sortie (104) à sortir seulement une ou plusieurs informations de distance qui est ou qui sont sélectionnées parmi le nombre d'informations de distance acquises par l'unité d'acquisition (102) pour la période divisée et qui est ou qui sont égales ou inférieures à la première valeur limite supérieure prédéterminée.

2. Dispositif de détection d'objets (11) selon la revendication 1, dans lequel
l'unité d'ajustement (103) est configurée pour ajuster le nombre d'informations de distance à être sorties par l'unité de sortie (104) dans le cycle de mesure afin qu'il soit égal ou inférieur à une seconde valeur limite supérieure prédéterminée.

3. Dispositif de détection d'objets (11) selon la revendication 1 ou 2, dans lequel
lorsque le nombre d'informations de distance acquises dans l'une des périodes divisées est supérieur à la première valeur limite supérieure, l'unité d'ajustement (103) est configurée pour sortir les informations de distance ayant un temps écoulé plus court à partir de la transmission de l'onde ultrasonique que d'autres informations de distance dans l'une des périodes divisées.

4. Dispositif de détection d'objets (11) selon la revendication 1 ou 2, dans lequel
lorsque le nombre d'informations de distance acquises dans l'une des périodes divisées est supérieur à la première valeur limite supérieure, l'unité d'ajustement (103) est configurée pour sortir les informations de distance dans lesquelles une intensité d'une onde réfléchie par l'objet est plus élevée que dans d'autres informations de distance dans l'une des périodes divisées.

5. Dispositif de détection d'objets (11) selon l'une des revendications 1 à 4, dans lequel
la pluralité de périodes divisées est définie de manière à diviser de façon inégale le cycle de mesure.

6. Dispositif de détection d'objets (11) selon la revendication 5, dans lequel
une période divisée parmi la pluralité de périodes divisées est plus courte lorsqu'un temps écoulé à partir de la transmission de l'onde ultrasonique est plus court.
